# EUROPEAN PATENT APPLICATION

(11) **EP 4 124 879 A1**
(43) Date of publication of application: **01.02.2023**
(21) Application number: 21382696.9
(22) Date of filing: 27.07.2021
(51) Int. Cl.: G01S 7/03, H01Q 1/32, H01Q 1/42, B60R 13/00, G01S 13/931

(54) **RADOME FOR VEHICLES**

(71) Applicant: Zanini Auto Grup, S.A., 08150 Parets del Vallès - Barcelona (ES)
(72) Inventor: MAYER PUJADAS, August, 08150 Parets del Vallès (Barcelona) (ES); BRAVO GARCIA, Beatriz, 08150 Parets del Vallès (Barcelona) (ES); SOLANS SALA, Serni, 08150 Parets del Vallès (Barcelona) (ES); ARMENGOL ROCASPANA, Josep, Maria, 08150 Parets del Vallès (Barcelona) (ES); PERALTA MORALES, Jerson, Jair, 08150 Parets del Vallès (Barcelona) (ES)
(74) Representative: Herrero & Asociados, S.L.

(57) **Abstract**

The radome (1) for vehicles comprises a frontal transparent layer (5); a metal-looking decoration layer (7); and a rear layer (10); wherein the radome (1) also comprises an adhesion promoter layer (8) placed between the metal-looking decoration layer (7) and the rear layer (10).

In the radome there is no air gap between its plastic molded parts, enhancing its performance to transmit the radar emitted and received waves.

## Description

The present invention refers to a radome for vehicles.

### Background of the invention

The continuing evolution of automotive technology aims to deliver Automated Driving Systems (ADS) through increasing levels of driver assistance defined by the Society Automotive Engineers (SAE) in the coming years. The radomes are a relevant part of these systems since they provide protection to the radars that are used to detect the obstacles on the car's path. At the same time, radomes usually represent the car manufacturer's emblem.

The radomes, seen by an external observer, usually contain colored areas and metal-looking ones that, combined, represent the manufacturer's emblem. The metal-looking appearance, compatible with high transmission levels of the signal emitted and received by the protected radar, is provided by some bright decoration layer held by plastic parts.

The mentioned increasing levels of driver assistance require increased performances of the radars. Therefore, the transmission requirements of the radomes are being tightened to take maximum profit of the improvements on the radars, maximizing transmission and minimizing reflection. Additionally, the automotive market is under a constant price pressure which requires a simplification of the manufacturing costs, compatible with the increasing performance to be achieved.

Most of today's premium radomes have a transparent resin at front to protect inner decoration layers, which are mainly composed of metallic looking and colored decorations. Another resin layer at the rear side acts as a substrate to complete the protection of the decoration layers and provide fixing means to other parts of the car. One of the identified elements of the radome that may decrease its performances to transmit the radar emitted and received waves is the existence of an air gap between its layers.

EP 3529857 A1, in the name of the same applicant than the present application, discloses a radome where the front and rear parts are welded, even in the field of view area, to minimize the gap between substrates and kept it as constant and small as possible. However, this results in accurate and complicated manufacturing processes. Additionally, depending on the water absorption properties of some resin materials, or the water tightness of the assembled radome, water may ingress in the gap.

US 7990334 B2 discloses a radome with a front and a rear part which have a plurality of engaging projection and depression zones to improve the mechanical coupling between both parts. However, this is just a mechanical joint, where the presence of the metal-looking design layer does not allow a good attachment between front and rear parts because no welding is achieved between both parts.

CN 103367913 B discloses a radome with a front part decorated at its rear face by magnetron-sputtering. It must be protected with organic paint coating, which requires a long baking process at high temperature, before joining the rear part by means of adhesive or insert molding.

### Description of the invention

Therefore, one purpose of the present invention is to provide a radome for vehicles in which there is no air gap between its plastic molded parts, enhancing its performance to transmit the radar emitted and received waves.

With the radome for vehicles according to the present invention it is possible to solve said drawbacks, providing other advantages that are described below.

The radome for vehicles according to the present invention comprises:
- a frontal transparent layer;
- a metal-looking decoration layer; and
- a rear layer;
wherein the radome also comprises an adhesion promoter layer placed between the metal-looking decoration layer and the rear layer.

The adhesion promoter layer is in contact with the metal-looking decoration layer. Furthermore, the adhesion promoter layer is in contact with the rear layer if there is no other layer between them.

Adhesion promoters are commercially available and are typically used when adhesives or tapes must be applied on Low Surface Energy (LSE) plastics like Polypropylene (PP), Polyethylene (PE) or on powder-coated paints. They usually contain a high percentage of organic solvents like Cyclohexane, Xylene, Ethylbenzene, Ethyl Alcohol, Ethyl Acetate or Toluene. Other families of adhesion promoters are designed to improve the adhesion of polyurethane-based adhesives or sealants on glass, plastics, painted surfaces and metals. While they are widely used to improve the adhesion of adhesives or sealants to surfaces which would not easy be adhered to, this application uses them to improve the adhesion of a plastic resin to be molded on them.

Advantageously, the adhesion promoter layer has a viscosity lower than 30 mPa·s, and a thickness lower than 20 µm.

The radome for vehicles according to the present invention can also comprise a colored decoration layer provided with uncovered areas placed between the frontal transparent layer and the metal-looking decoration layer.

Furthermore, the radome for vehicles according to the present invention can also comprise an ink layer applied on the adhesion promoter layer, and this ink layer is preferably placed between the adhesion promoter layer and the rear layer.

If this ink layer is present, the adhesion promoter layer is in contact with the ink layer and the metal-looking decoration layer.

According to a possible embodiment, the metal-looking decoration layer, and the adhesion promoter layer and/or the ink layer, if present, comprise masked areas, and the masked areas of the metal-looking decoration layer, the adhesion promoter layer and/or the ink layer are placed matching to each other.

Advantageously, the metal-looking decoration layer is made from metals, metalloids and/or oxides.

The adoption of an insert molding process eliminates an intentionally defined air gap between plastic molded parts. An air gap complicates the manufacturing process required to keep it constant at a small dimension of about 0.1 mm. Additionally, the variability and the increase of the air gap causes degradation of the transmission capabilities of the radome.

The absence of air gap eliminates the possibility of water ingress in the gap that may damage the internal layers.

The proposed solution offers a chemical bonding that, in front of mechanical bonding, avoids the creation of air gaps during thermal cycling because of different coefficient of thermal expansion of the involved plastic materials.

The usage of adhesion promoter and ink to increase the adhesion instead of adhesives or internal protective coatings allows to use air spray deposition methods and very fast drying processes.

The deposition of metal-looking decoration layers, adhesion promoter and, optionally, ink layer on only selected areas allow better adhesion because of direct connection between the insert molded rear layer on the front set formed by the transparent layer and the colored decoration layer.

### Brief description of the drawings

For a better understanding the above explanation and for the sole purpose of providing an example, some non-limiting drawings are included that schematically depict a practical embodiment.
Fig. 1 is a fragmentary isometric view of the vehicle having a radome constructed in accordance with and embodying the invention positioned within a grill assembly and a radar antenna positioned behind the radome.
Fig. 2 is a front view of the radome, where a manufacturer's emblem may be identified by contrast of colored and bright areas.
Fig. 3 is schematical cross section according to A-A on Fig.2, showing the different layers of the first embodiment.
Fig. 4 is schematical cross section according to A-A on Fig.2, showing the different layers of the second embodiment.

### Description of preferred embodiments

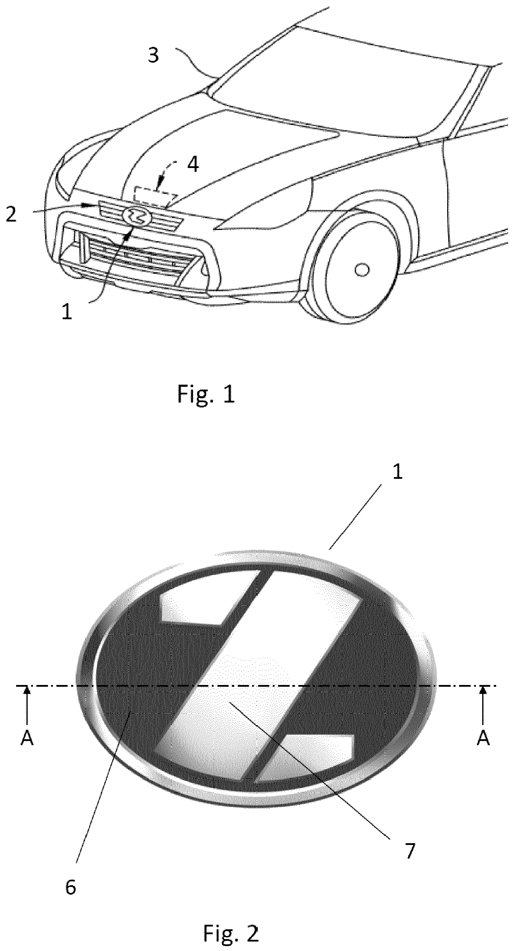

With reference now in detail to the drawings, wherein like numerals will be employed to denote like components throughout, as illustrated in Fig. 1, reference numeral 1 denotes generally a decorative radome constructed in accordance with and embodying the invention configured for mounting within a grill assembly 2 of a motor vehicle 3.

Positioned within the vehicle 3 behind and in registration with the decorative radome 1 is a radar antenna 4.

Fig. 2 shows a front view of the radome 1, where it is visible a radio transmissive colored layer 6 and a bright decoration layer 7 that provides the metal-looking appearance while keeping high transmittance performance for the signal emitted and received by the protected radar antenna 4.

### Embodiment 1

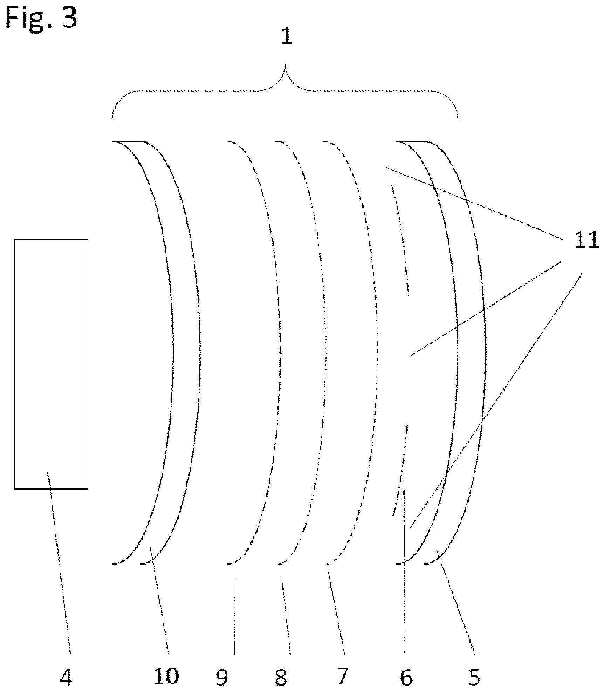

In the following, a first embodiment of the radome without air gaps is described with reference to Fig. 3, where a schematical cross section of the radome 1 is shown. The position of the different layers within the radome 1 may be observed. The thickness of the different layers is not to scale because the relation between them is of orders of magnitude. The different layers will be described from the proximal face (closer to an external observer, at the right in this figure) to the distal face (closer to the radar 4, at the left in this figure).

The radome 1 comprises a frontal transparent layer 5. It is made of a material with high transmissive capability to both the visible light and the signal emitted and received by the protected radar 4. It may be made of a plastic resin like Polycarbonate (PC) and may be obtained by injection molding or by cutting a laminated film of this material to the final desired shape.

As stated previously, the radome 1 also comprises a colored decoration layer 6 that provides opacity to the visible light while maintaining a high degree of transmission of the signal emitted and received by the protected radar 4. It partially covers one of the faces of the transparent layer 5, leaving some uncovered areas 11.

This colored decoration layer 6 may be obtained by printing a decorative ink on a face of the transparent layer 5, which has been obtained by any of its mentioned manufacturing methods. This printing process requires the usage of a mask to leave some uncovered areas 11 by the colored decoration layer 6.

Alternatively, the colored decoration layer 6 may also be obtained by injection molding in a manufacturing combined molding process with the transparent layer 5. The colored decoration layer 6 is represented on the distal face of the transparent layer 5. However, it may be located on its proximal face.

The radome 1 according to the present invention also comprises a metal-looking decoration layer 7 that is deposited on the distal face (closer to the radar 4) of the set formed by the transparent layer 5 and the colored decoration layer 6. The colored decoration layer 6 may be seen by an external observer through the uncovered areas 11 of the colored decoration layer 6. The combination of opaque discontinuous areas of colored decoration layer 6 and metal-looking decoration layer 7 generates an emblem that may be seen by the external observer as shown on Fig. 2.

The metal-looking decoration layer 7 provides a bright appearance thanks to the usage of metals, metalloids and/or oxides. In any case, it must ensure high electrical resistivity to reduce the attenuation it causes to the signal emitted and received by the protected radar 4. This thin and controlled thickness layer may be deposited, for instance, by a Physical Vapor Deposition (PVD) magnetron sputtering process or by a Plasma Enhanced Chemical Vapor Deposition (PECVD) process, or others, depending on the composition of the layer.

Since the composition and manufacturing process of the metal-looking decoration layer 7 does not offer a good adhesion to a rear layer 10 obtained by an insert molding process, some surface preparation on the metal-looking decoration layer 7 must be performed to improve it.

The radome 1 according to the present invention also comprises an adhesion promoter layer 8 applied on the metal-looking decoration layer 7. This adhesion promoter layer 8 is bifunctional and generates a direct bonding between adjacent layers, not being an adhesive, which would generate independent bonding between the adhesive and each one of the layers to be bonded. This adhesion promoter layer 8 is very thin, so that it provides improved interfacial bonding characteristics, yet it is not so thick that its bulk properties significantly affect the overall properties of the bond.

The adhesion promoter layer 8 may be conveniently applied by an air spray method thanks to its low viscosity (30 mPa·s maximum) forming a dried layer of a thickness of 20 µm maximum. Additionally, it dries in 30 to 90 seconds at room temperature. This is a much significant improvement compared to the acrylic two-component paint coat layers that usually require heat-drying in a chamber at 80 °C for 1 hour to volatilize the solvent or to the solvent-type adhesive agent coatings, which show viscosity of 500 mPa with drying times of 70 - 90 °C of during 0.5 - 3.5 hours.

Optionally, a polymer compatible ink layer 9 may be applied on the adhesion promoter layer 8. The ink layer 9 is composed of an ink used for applications on plastic parts of the same polymer than the raw material of the rear layer 10. It is similar to the ink that may be used to generate the colored decoration layer 6.

The difference is its compatibility with the raw material of the rear layer 10 instead of being compatible with the raw material of the transparent layer 5.

Its function is to provide some additional protection to the metal-looking decoration layer 7 in front of the high temperatures associated to an insert molding process. The fact of being an ink allows to dissolve it with a solvent which makes it compatible with an air spray method, with viscosities below 30 seconds when tested according to Viscosity Cup Ford-4 method. The dried layer may have a thickness of 30 µm maximum.

The decision to use or not this optional ink layer 9 may be based on the thermal sensitivity of the materials used for the metal-looking decoration layer 7.

As commented, the rear layer 10 is applied at the most distal face by an insert molding process of the rest of layers described before. Its raw material may be Acrylonitrile butadiene styrene (ABS) or a blend of Polycarbonate and Acrylonitrile butadiene styrene (PC/ABS).

They require molding temperatures lower than the ones used for Polycarbonate (PC). This reduces the risk to damage the sensitive metal-looking decoration layer 7. The rear layer 10 provides a final protection to the internal decoration layers and usually contains the fixtures of the radome 1 to the rest of the car. It also offers additional opacity to visible light of the whole radome 1.

As described, the use of an adhesion promoter layer 8 and, optionally, the ink layer 9 allows to adopt an insert molding manufacturing process. This ensures the absence of an air gap which may degrade the transmission capabilities of the radome or complicate the manufacturing process to achieve a minimum and constant air gap in the whole field of view of the radome. The achieved adhesion between layers also avoids that air gaps will be generated during thermal cycling of laboratory tests or life of the product.

The small total combined thickness of adhesion promoter layer 8 and ink layer 9 (20 µm maximum + 30 µm maximum = 50 µm maximum) provides a high degree of freedom to select their components, even having dielectric properties much different of the transparent layer 5 and the rear layer 10, without affecting to the transmission properties of the radome 1.

In case of severe mechanical or corrosion requirements, a hard coating consisting of a varnish may be applied on the proximal and or distal faces of the set of layers described until now.

### Embodiment 2

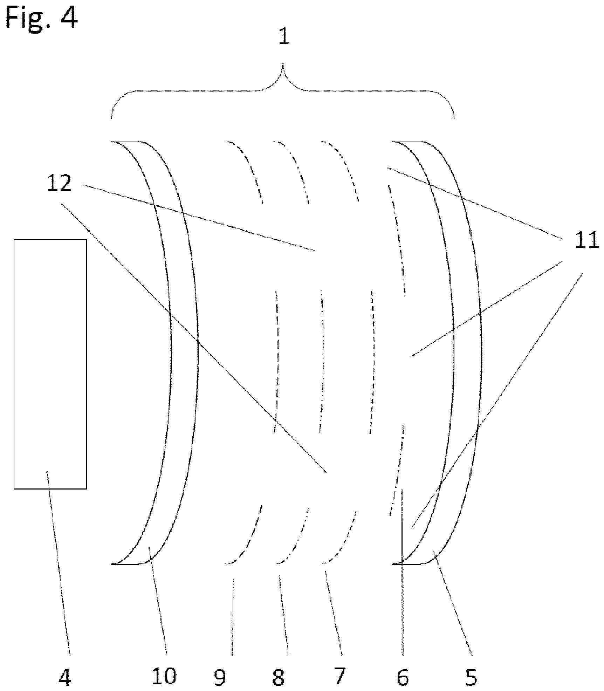

In the following, a second embodiment of the radome 1 without air gaps is described with reference to Fig. 4. In the second embodiment, identical reference numerals are given to the components that are the same or similar to the corresponding components of the first embodiment and redundant description is omitted therein.

In this second embodiment, a mask is applied to substantially cover the opaque areas defined by the colored decoration layer 6. The usage of such masking process is maintained during the deposition of the metal-looking decoration layer 7, the adhesion promoter layer 8 and the optional ink layer 9. This results in masked areas 12 which will be free of these layers when the mask is removed.

The rear layer 10 is also manufactured by insert molding. Some areas of its proximal face will be in contact with the adhesion promoter layer 8 (or the ink layer 9, if it has been applied) and some other areas will be in contact with the set formed by the transparent layer 5 and the colored decoration layer 6. The masking process adds an additional step in the manufacturing process although improves the adhesion between the rear layer 10 and the rest of the radome 1.

Even though reference has been made to specific embodiments of the invention, it is obvious for a person skilled in the art that the radome for vehicles described herein is susceptible to numerous variations and modifications, and that all of the details mentioned can be substituted for other technically equivalent ones without departing from the scope of protection defined by the attached claims.

## Claims

1. Radome (1) for vehicles, comprising:
- a frontal transparent layer (5);
- a metal-looking decoration layer (7); and
- a rear layer (10);
**characterized in that** the radome (1) also comprises an adhesion promoter layer (8) placed between the metal-looking decoration layer (7) and the rear layer (10).

2. Radome (1) for vehicles according to claim 1, wherein the adhesion promoter layer (8) has a viscosity lower than 30 mPa·s.

3. Radome (1) for vehicles according to claims 1 or 2, wherein the adhesion promoter layer (8) has a thickness lower than 20 µm.

4. Radome (1) for vehicles according to anyone of the previous claims, wherein the radome (1) also comprises a colored decoration layer (6) provided with uncovered areas (11) placed between the frontal transparent layer (5) and the metal-looking decoration layer (7).

5. Radome (1) for vehicles according to anyone of the previous claims, wherein the radome (1) also comprises an ink layer (9) applied on the adhesion promoter layer (8).

6. Radome (1) for vehicles according to claim 5, wherein the ink layer (9) is placed between the adhesion promoter layer (8) and the rear layer (10).

7. Radome (1) for vehicles according to anyone of the previous claims, wherein the metal-looking decoration layer (7) and the adhesion promoter layer (8) comprise masked areas (12).

8. Radome (1) for vehicles according to claim 5, wherein the ink layer (9) comprises masked areas (12).

9. Radome (1) for vehicles according to claims 7 and 8, wherein the masked areas (12) of the metal-looking decoration layer (7), the adhesion promoter layer (8) and/or the ink layer (9) are placed matching to each other.

10. Radome (1) for vehicles according to claim 1, wherein the metal-looking decoration layer (6) is made from metals, metalloids and/or oxides.
